(19) Europäisches Patentamt
European Patent Office
Office européen des brevets

(11) EP 2 288 956 B1

(12) **FASCICULE DE BREVET EUROPEEN**

(45) Date de publication et mention de la délivrance du brevet:
**16.05.2018 Bulletin 2018/20**

(21) Numéro de dépôt: **09766096.3**

(22) Date de dépôt: **22.06.2009**

(51) Int Cl.:
***C08G 69/26*** (2006.01) ***C08G 69/36*** (2006.01)
***C08L 77/06*** (2006.01) ***C08L 77/12*** (2006.01)
***C08L 77/00*** (2006.01) ***C08J 5/18*** (2006.01)

(86) Numéro de dépôt international:
**PCT/FR2009/051185**

(87) Numéro de publication internationale:
**WO 2009/153534 (23.12.2009 Gazette 2009/52)**

(54) **COPOLYAMIDE, COMPOSITION COMPRENANT UN TEL COPOLYAMIDE ET LEURS UTILISATIONS**

COPOLYAMID, ZUSAMMENSETZUNG MIT EINEM SOLCHEN COPOLYAMID UND VERWENDUNGEN DAVON

COPOLYAMIDE, COMPOSITION COMPRISING SUCH A COPOLYAMIDE AND USES THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.06.2008 FR 0854090**

(43) Date de publication de la demande:
**02.03.2011 Bulletin 2011/09**

(73) Titulaire: **ARKEMA FRANCE**
**92700 Colombes (FR)**

(72) Inventeurs:
- **SAILLARD, Benjamin**
  **F-27300 Bernay (FR)**
- **BLONDEL, Philippe**
  **F-27300 Bernay (FR)**
- **MICHALOWICZ, Claire Isabelle**
  **F-27000 Evreux (FR)**

(56) Documents cités:
**EP-A- 1 369 447**
**EP-A- 1 595 907**
**EP-A1- 1 227 132**
**EP-A1- 2 022 810**
**EP-A1- 2 113 535**
**WO-A-91/06660**
**WO-A2-2009/132989**
**FR-A1- 2 575 756**
**GB-A- 1 193 487**
**US-A- 2 733 230**
**US-A- 5 434 307**
**US-A- 6 004 784**
**US-A1- 2005 272 908**
**US-B1- 6 255 378**

- **KIM KI-SOO ET AL: "Copolyamides derived from brassylic acid" JOURNAL OF APPLIED POLYMER SCIENCE, JOHN WILEY AND SONS INC. NEW YORK, US, vol. 23, 1 janvier 1979 (1979-01-01), pages 439-444, XP002451227 ISSN: 0021-8995**
- **"ISO 16396-1:2015(en) - Plastics -polyamide (PA) moulding and extrusion materials - Part 1 Designation system, marking of products and basis for specifications", INTERNATIONAL STANDARD ISO, XX, XX, vol. ISO 16396-1:2015(en), 15 February 2015 (2015-02-15), page 22pp, XP009192646,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte à un copolyamide ainsi qu'à son utilisation, notamment dans la fabrication d'objets divers, comme des biens de consommation courante tels que les montures de lunettes, des lentilles ou des verres de lunettes, des équipements électriques, électroniques ou automobiles, du matériel chirurgical, de l'emballage ou encore des articles de sport.

L'invention se rapporte également à une composition comprenant un tel copolyamide ainsi qu'à l'utilisation de cette composition, notamment dans la fabrication de tout ou partie des objets qui viennent d'être énumérés ci-dessus.

On connaît à ce jour des polyamides amorphes transparents obtenus par polycondensation de diamines et de diacides. De tels polyamides sont particulièrement intéressants car ils présentent de nombreuses propriétés mécaniques telles qu'une résistance aux chocs, à la traction et/ou la compression, une tenue élevée aux agressions extérieures (comme la chaleur, les agents chimiques, les rayonnements UV,...), en plus de la transparence,.

Aussi a-t-on vu apparaître des objets à base de polyamides, tels que par exemple des montures de lunettes, boîtiers divers, équipements pour automobile, matériel chirurgical, emballage, articles de sport.

Des polyamides amorphes transparents convenant pour la fabrication de ce type d'objets ont notamment été décrits dans les documents EP 1 595 907 et US 2005/0272908 au nom du Demandeur. Ces polyamides sont obtenus par polycondensation d'au moins une diamine cycloaliphatique et d'au moins 50% en mole d'acide tetradécanedioïque, le ou les autres diacides carboxyliques complémentaires pouvant être choisis parmi les diacides carboxyliques aliphatiques, aromatiques et cycloaliphatiques.

Ces polyamides présentent non seulement l'ensemble des propriétés énoncées ci-dessus, mais également une température de transition vitreuse Tg relativement élevée, typiquement de l'ordre de 130°C à 160°C environ.

Cependant, les préoccupations environnementales des dernières années militent en faveur de la mise au point de matériaux qui répondent le plus possible aux préoccupations de développement durable, en limitant notamment les approvisionnements en matières premières issues de l'industrie pétrolière pour leur fabrication.

Par ailleurs, le document FR 2 575 756 décrit des copolyamides transparents obtenus par polycondensation utilisant à titre de diamine la bis-(4-amino-3,5-diéthylcyclohexyl)-méthane.

Le document GB 1,193,487 décrit des polyamides transparents obtenus par polycondensation utilisant à titre de diamine la diméthyl-bis-(4-aminocyclohexyl)-méthane. Cette diamine correspond au composé PACP.

Le document EP 1 227 132 décrit des compositions transparentes de copolyamides et dans ce cadre dans les exemples un copolyamide PASA obtenu par polycondensation de DMACM, de lauryllactame et d'acides iso- et téréphtaliques.

Le document US 6,255,378 décrit des compositions comprenant des résines polyamides et des couches de silicates.

Le but de la présente invention est donc de proposer un polyamide, qui possède au moins certaines des propriétés mécaniques énoncées ci-dessus tout en étant constitué à partir d'une matière première renouvelable ou bioressourcée selon la norme ASTM D6866.

Selon l'invention, le polyamide est plus précisément un copolyamide.

De manière générale, les copolyamides comprennent au moins deux motifs répétitifs distincts, ces motifs distincts étant formés à partir des deux monomères, ou comonomères, correspondants. Les copolyamides sont donc préparés à partir de deux ou plusieurs monomères, ou comonomères, choisis parmi un aminoacide, un lactame et/ou un diacide carboxylique et une diamine.

Le copolyamide selon l'invention comprend au moins deux motifs (représentés respectivement « A » et « (diamine).(diacide en Cw) »), et répond à (c'est-à-dire comprend au moins) la formule générale suivante :

$$\text{A/(diamine).(diacide en Cw),}$$

dans laquelle :

- la diamine est une diamine cycloaliphatique comprenant deux cycles choisie parmi la bis(3,5-dialkyl-4-aminocyclohexyl)-ethane, la bis(3,5-dialkyl-4-aminocyclohexyl)propane, la bis(3,5-dialkyl-4-amino-cyclo-hexyl)butane, la bis-(3-méthyl-4-aminocyclohexyl)-méthane (MACM) et la p-bis(aminocyclohexyl)methane (PACM),
- w représente le nombre d'atomes de carbone du diacide et est compris entre 4 et 36, le diacide étant l'acide sébacique (w=10), et
- A est choisi parmi un motif obtenu à partir d'un aminoacide choisi parmi l'acide 9-aminononanoïque, l'acide 10-aminodécanoïque et l'acide 11-aminoundécanoïque ainsi que ses dérivés.

Selon l'invention, au moins un des (co)monomères choisis parmi A et le diacide en Cw est obtenu en tout ou

partie à partir de matières premières renouvelables ou bioressourcées selon la norme ASTM D6866 afin que la teneur exprimée en pourcentage de carbone organique renouvelable (aussi appelé carbone bioressourcé ou carbone « contemporain ») dans le copolyamide, notée $\%C_{org.renouv}$, soit strictement supérieure à 0, la teneur $\%C_{org.renouv}$ répondant à l'équation (I) suivante :

$$\%C_{org.renouv} = \frac{\sum_i Fi \times Ci + \sum_k Fk \times Ck'}{\left(\sum_j Fj \times Cj + \sum_i Fi \times Ci + \sum_k Fk \times Ck\right)} \times 100 \qquad \text{(I)}$$

avec i = monomère(s) issu(s) de matières premières 100% renouvelables au sens de la norme ASTM D6866
j = monomère(s) issu(s) de matières premières 100% fossiles au sens de la norme ASTM D6866
k = monomère(s) issu(s) en partie de matières premières renouvelables au sens de la norme ASTM D6866
Fi, Fj, Fk = fraction(s) molaire(s) respective(s) des monomères i, j et k dans le copolyamide
Ci, Cj, Ck = nombre respectif d'atomes de carbone des monomères i, j et k dans le copolyamide
Ck' = nombre d'atomes de carbone organique renouvelable au sens de la norme ASTM D6866 dans le(s) monomère(s) k.

La nature (renouvelable ou fossile), c'est-à-dire la provenance de chacun des monomères i, j et k, est déterminée selon l'une des méthodes de la norme ASTM D6866.

En d'autres termes, dans les copolyamides selon l'invention, au moins l'un des (co)monomères que sont :

- soit l'aminoacide et le diacide en Cw,
- soit le lactame et le diacide en Cw
- soit la diamine en Cx ainsi que les diacides en Cy et en Cw,

est obtenu en tout ou partie à partir d'une matière première renouvelable selon la norme ASTM D6866.

Le (co)monomère A, dans toutes ses variantes - lactame, aminoacide ou (diamine en Cx).(diacide en Cy) -, la diamine cycloaliphatique et le diacide Cw sont des monomères i, j et k au sens de l'équation (I).

Une matière première renouvelable ou bioressourcée est une ressource naturelle, animale ou végétale, dont le stock peut se reconstituer sur une période courte à l'échelle humaine. Il faut en particulier que ce stock puisse se renouveler aussi vite qu'il est consommé.

A la différence des matériaux issus de matières fossiles, les matières premières renouvelables ou bioressourcées contiennent du $^{14}C$. Tous les échantillons de carbone tirés d'organismes vivants (animaux ou végétaux) sont en fait un mélange de 3 isotopes : $^{12}C$ (représentant environ 98,892 %), $^{13}C$ (environ 1,108 %) et $^{14}C$ (traces: $1{,}2.10^{-10}$ %). Le rapport $^{14}C/^{12}C$ des tissus vivants est identique à celui de l'atmosphère. Dans l'environnement, le $^{14}C$ existe sous deux formes prépondérantes : sous forme minérale, c'est-à-dire de gaz carbonique ($CO_2$), et sous forme organique, c'est-à-dire de carbone intégré dans des molécules organiques.

Dans un organisme vivant, le rapport $^{14}C/^{12}C$ est maintenu constant par le métabolisme car le carbone est continuellement échangé avec l'environnement. La proportion de $^{14}C$ étant constante dans l'atmosphère, il en est de même dans l'organisme, tant qu'il est vivant, puisqu'il absorbe ce $^{14}C$ comme il absorbe le $^{12}C$. Le rapport moyen de $^{14}C/^{12}C$ est égal à $1{,}2\times10^{-12}$.

Le $^{12}C$ est stable, c'est-à-dire que le nombre d'atomes de $^{12}C$ dans un échantillon donné est constant au cours du temps. Le $^{14}C$, lui, est radioactif (chaque gramme de carbone d'un être vivant contient suffisamment d'isotopes $^{14}C$ pour donner 13,6 désintégrations par minute) et le nombre de tels atomes dans un échantillon décroît au cours du temps (t) selon la loi :

$$n = no \exp(-at),$$

dans laquelle:

- no est le nombre de $^{14}C$ à l'origine (à la mort de la créature, animal ou plante),
- n est le nombre d'atomes $^{14}C$ restant au bout du temps t,
- <u>a</u> est la constante de désintégration (ou constante radioactive) ; elle est reliée à la demi-vie.

La demi-vie (ou période) est la durée au bout de laquelle un nombre quelconque de noyaux radioactifs ou de particules instables d'une espèce donnée, est réduit de moitié par désintégration ; la demi-vie $T_{1/2}$ est reliée à la constante de désintégration a par la formule $aT_{1/2}$= ln 2. La demi-vie du $^{14}C$ vaut 5730 ans.

Compte tenu de la demi-vie ($T_{1/2}$) du $^{14}C$, la teneur en $^{14}C$ est sensiblement constante depuis l'extraction des matières premières renouvelables, jusqu'à la fabrication des copolyamides selon l'invention et même jusqu'à la fin de leur utilisation.

Le copolyamide selon l'invention est donc constitué au moins partiellement de carbone organique issu de matières premières renouvelables ou bioressourcées, ce qui pourrait être certifié par détermination de la teneur en $^{14}C$ selon l'une des méthodes décrites dans la norme ASTM D6866.

Cette norme ASTM D6866 comporte trois méthodes de mesure de carbone organique issu de matières premières renouvelables, dénommé en langue anglaise "biobased carbon". Les proportions indiquées pour les copolyamides de l'invention sont de préférence mesurées selon la méthode par spectrométrie de masse ou la méthode par spectrométrie à scintillation liquide décrites dans cette norme.

Par conséquent, la présence de $^{14}C$ dans un matériau, et ce quelle qu'en soit la quantité, donne une indication sur l'origine des molécules le constituant, à savoir qu'elles proviennent de matières premières renouvelables ou bioressourcées et non de matériaux fossiles. Les mesures effectuées par les méthodes décrites dans la norme ASTM D6866 permettent ainsi de distinguer les (co)monomères ou produits de départs issus de matières renouvelables des (co)monomères ou produits issus de matériaux fossiles. Ces mesures ont un rôle de test.

Ainsi, par le choix délibéré d'au moins un (co)monomère, ou produit de départ, qui est en partie obtenu à partir d'une matière première renouvelable au sens de la norme ASTM D6866, on obtient des copolyamides qui présentent des propriétés mécaniques pour la plupart comparables à celles des polyamides de l'art antérieur tels que ceux décrits ci-dessus, mais qui, de plus, permettent de limiter l'utilisation des ressources fossiles pour répondre à l'une des exigences de la politique de développement durable évoquée ci-dessus.

Par exemple, ce ou ces (co)monomères peuvent être issus de ressources renouvelables telles que les huiles végétales ou les polysaccharides naturels tels que l'amidon ou la cellulose, l'amidon pouvant être extrait, par exemple, du maïs ou de la pomme de terre. Ce ou ces (co)monomères, ou produits de départ, peuvent en particulier provenir de divers procédés de transformation, notamment de procédés chimiques classiques, mais également de procédés de transformation par voie enzymatique ou encore par bio-fermentation.

Dans une version particulière, la teneur $\%C_{org.renouv}$ du copolyamide selon l'invention est supérieure ou égale à 20%, avantageusement supérieure ou égale à 50%, de préférence supérieure ou égale à 52%, et plus préférentiellement supérieure ou égale à 54%.

Lorsque le copolyamide selon l'invention présente une teneur $\%C_{orgrenouv}$ supérieure ou égale à 50%, il répond aux critères d'obtention de la certification "Biomass Pla" du JBPA, certification qui repose également sur la norme ASTM D6866. Le copolyamide selon l'invention peut en outre valablement porter le label "Bio-mass-based" de l'Association JORA.

L'invention se rapporte également à une composition, ladite composition comprenant au moins un copolyamide tel que décrit ci-dessus.

L'invention se rapporte également à l'utilisation d'un tel copolyamide ainsi qu'à l'utilisation d'une composition comprenant au moins un tel copolyamide pour constituer une structure monocouche ou au moins une couche d'une structure multicouche.

Dans une version avantageuse de l'invention, la teneur molaire en A est comprise entre 20 et 82%, la teneur molaire en diamine cycloaliphatique étant comprise entre 9 et 40% et la teneur molaire en diacide en Cw étant également comprise entre 9 et 40%.

Le choix de telles teneurs molaires permet d'obtenir, dans la plupart des cas, un copolyamide transparent, la transparence étant caractérisée par une enthalpie de fusion du copolyamide d'une valeur comprise entre 0 et 12J/g.

Dans une version préférentielle de l'invention, la teneur molaire en A est comprise entre 22 et 64%, les teneurs en diamine cycloaliphatique et en diacide en Cw étant chacune comprises entre 18 et 39%.

Il est précisé que l'expression "compris entre" utilisée dans l'ensemble des paragraphes précédents, mais également dans la suite de la présente description, doit s'entendre comme incluant chacune des bornes mentionnées.

Selon un premier aspect de l'invention, les copolyamides comprennent au moins deux motifs qui répondent à la formule A/(diamine).(diacide en Cw).

Dans la formule A/(diamine).(diacide en Cw) du copolyamide selon l'invention, la (diamine) désigne une diamine cycloaliphatique comprenant deux cycles spécifique. Les diamines comprenant deux cycles répondent notamment à la formule générale suivante :

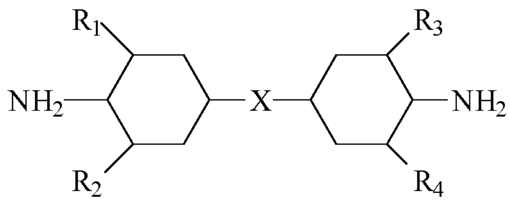

dans laquelle R1 à R4 représentent des groupements identiques ou différents choisis parmi un atome d'hydrogène ou des groupements alkyles de 1 à 6 atomes de carbone et X représente soit une liaison simple, soit un groupement divalent constitué:

- d'une chaîne aliphatique linéaire ou branchée comprenant de 1 à 10 atomes de carbone,
- d'un groupement cycloaliphatique de 6 à 12 atomes de carbone,
- d'une chaîne aliphatique linéaire ou branchée de 1 à 10 atomes de carbone, substituée par des groupements cycloaliphatiques de 6 à 8 atomes de carbone
- d'un groupement de 8 à 12 atomes de carbone constitué d'un dialkyle, linéaire ou branché, avec un groupement cyclohexyle ou benzyle.

La diamine cycloaliphatique du copolyamide selon l'invention est choisie parmi la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM) et la p-bis(aminocyclohexyl)-methane (PACM.

De manière encore plus préférentielle, et en vue d'obtenir un copolyamide transparent, la diamine cycloaliphatique est choisie parmi la bis-(3-méthyl-4-aminocyclohexyl)-méthane (BMACM ou MACM), notamment celle commercialisée par la société BASF sous la dénomination Laromin® C260, et la p-bis(aminocyclohexyl)-methane (PACM), à l'exclusion de la PACM qui, lorsque cette dernière est formée d'un mélange de deux ou plusieurs stéréoisomères choisis parmi la PACM cis/cis, cis/trans et trans/trans, comprend plus de 40% en masse du stéréoisomère trans/trans. Est en particulier exclue la PACM comprenant de 48 à 50% en masse du stéréoisomère trans/trans, telle que la PACM48 commercialisée par la société BASF sous la dénomination Dicycane® ou la PACM50. Par contre, tout comme la BMACM, la PACM20 comprenant de l'ordre de 20% en masse du stéréoisomère trans/trans, notamment celle commercialisée par la société AIR PRODUCTS sous la dénomination Amicure®, est plus particulièrement préférée.

De même, dans la formule A/(diamine).(diacide en Cw), le (diacide en Cw) désigne un diacide aliphatique de formule $HOOC-(CH_2)_{w-2}-COOH$ dans laquelle w indique le nombre total d'atomes de carbone-présents dans le diacide, w étant bien entendu un nombre entier strictement supérieur à 2.

Le nombre d'atomes de carbone w du diacide du motif (diamine).(diacide en Cw) du copolyamide selon l'invention, est de préférence un nombre entier compris entre 4 et 36.

Préférentiellement, le diacide en Cw est obtenu à partir d'une matière première renouvelable selon la norme ASTM D6866 et est choisi parmi l'acide succinique (w=4), l'acide adipique (w=6), l'acide heptanedioïque (w=7), l'acide azélaïque (w=9), l'acide sébacique (w=10), l'acide undécanedioïque (w=11), l'acide dodécanedioïque (w=12), l'acide brassylique (w=13), l'acide tetradécanedioïque (w=14), l'acide hexadécanedioïque (w=16), l'acide octadécanedioïque (w=18), l'acide octadécènedioïque (w=18), l'acide eicosanedioïque (w=20), l'acide docosanedioïque (w=22) et les dimères d'acides gras contenant 36 carbones.

Les dimères d'acides gras mentionnés ci-dessus, mais également dans la suite de la présente description pour les diacides en Cy et en Cu, sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Les proportions molaires de diamine cycloaliphatique et de (diacide en Cw) sont préférentiellement stoechiométriques.

Selon une première variante de l'invention, le (co)monomère ou motif A, dans la formule générale A/(diamine).(diacide en Cw) est obtenu à partir d'un aminoacide, cet aminoacide étant de préférence obtenu à partir d'une matière première renouvelable, toujours selon la norme ASTM D6866.

Plus préférentiellement, l'aminoacide est choisi parmi l'acide 9-aminononanoïque, l'acide 10-aminodécanoïque, et l'acide 11-aminoundécanoïque ainsi que ses dérivés, notamment l'acide N-heptyl-11-aminoundécanoïque.

A la place d'un aminoacide, on pourrait également envisager un mélange de deux, trois,... ou plus, aminoacides. Toutefois, les copolyamides formés comprendraient alors trois, quatre,... ou plus, motifs, respectivement. Il est précisé que le cas particulier d'un copolyamide comprenant trois motifs distincts est décrit ci-après, notamment dans le deuxième aspect de l'invention.

Le comonomère ou motif (diamine).(diacide en Cw) dans la formule A/(diamine).(diacide en Cw) peut être

constitué par toute combinaison de diamine cycloaliphatique et de diacide qu'il est possible d'envisager et, en particulier, par toute combinaison des diamines cycloaliphatiques et diacides en Cw qui ont été énumérés ci-dessus.

Ainsi, en symbolisant par la lettre B la BMACM et par le nombre w le diacide en Cw comprenant w atomes de carbone, on peut notamment envisager la mise en oeuvre des comonomères suivants : B.10 si l'on considère la BMACM comme diamine cycloaliphatique.

Parmi les combinaisons envisageables, et en symbolisant par le nombre 11 le motif issu de l'acide 11-aminoundécanoïque et par P la diamine PACM, les copolyamides suivants présentent un intérêt particulièrement marqué : il s'agit des copolyamides répondant à l'une des formules choisies parmi 11/B.10, 11/P.10.

Selon un deuxième aspect de l'invention, le copolyamide comprend en outre au moins un troisième motif qui est représenté ci-après « (diamine en Ct).(diacide en Cu) » à la suite de la formule générale de l'invention précédemment décrite selon un premier aspect. Dans le cas où il comprend au moins trois motifs, le copolyamide de l'invention répond donc à (c'est à dire qu'il comprend au moins) la formule générale suivante :

A/(diamine).(diacide en Cw)/(diamine en Ct).(diacide en Cu)

dans laquelle t représente le nombre d'atomes de carbone de la diamine et u représente le nombre d'atomes de carbone du diacide, t et u étant compris chacun entre 4 et 36.

Dans la présente description de la formule du premier aspect comme du second aspect de l'invention, le terme « au moins » signifie que le copolyamide selon l'invention comprend la formule explicitée, respectivement à 2 et à 3 motifs comprenant les 2 premiers motifs, mais cette formule de 2 motifs ou de 3 motifs peut être comprise dans une formule d'un copolyamide comprenant en outre encore d'autres motifs différents. Un copolyamide selon l'invention peut ainsi présenter 4, 5, ou 6 ... motifs différents, dès l'instant qu'ils comprennent au moins les 2 motifs A/(diamine).(diacide en Cw), ou les 3 motifs A/(diamine).(diacide en Cw)/(diamine en Ct).(diacide en Cu).

Selon l'invention, au moins un des monomères choisis parmi A, le diacide en Cw, la diamine en Ct et le diacide en Cu est obtenu en tout ou partie à partir de matières premières renouvelables ou bioressourcées selon la norme ASTM D6866, de telle sorte que la teneur $\%C_{org.renouv}$ déterminée par l'équation (I) énoncée ci-dessus soit strictement supérieure à 0.

En d'autres termes, dans les copolyamides selon l'invention, au moins l'un des (co)monomères que sont :

- soit l'aminoacide, les diacides en Cw et Cu, et la diamine en Ct,
- soit le lactame, les diacides en Cw et Cu, et la diamine en Ct,
- soit les diamines en Cx et Ct ainsi que les diacides en Cy, Cw et Cu, est obtenu à partir d'une matière première renouvelable selon la norme ASTM D6866.

Le (co)monomère A, la diamine cycloaliphatique, la diamine en Ct et les diacides Cw et Cu sont des monomères i, j et k au sens de l'équation (I).

Dans une version avantageuse de l'invention, les teneurs molaires sont les suivantes :

- la teneur molaire en A est comprise entre 20 et 82% et avantageusement entre 22 et 64%,
- la somme des teneurs molaires en diamine cycloaliphatique et en diamine en Ct est comprise entre 9 et 40% et avantageusement entre 18 et 39%.
- la somme des teneurs molaires en diacides en Cw et en Cu est comprise entre 9 et 40% et avantageusement entre 18 et 39%.

Dans la formule A/(diamine).(diacide en Cw)/(diamine en Ct).(diacide en Cu) du copolyamide selon le deuxième aspect de l'invention, on se reportera à ce qui a été précédemment décrit pour les (co)monomères ou motifs A, d'une part, et (diamine).(diacide en Cw), d'autre part.

Dans cette même formule, la (diamine en Ct) désigne une diamine dans laquelle t indique le nombre total d'atomes de carbone présents dans la diamine, t étant bien entendu un nombre entier strictement supérieur à 0.

De même, le (diacide en Cu) désigne un diacide dans laquelle u indique le nombre total d'atomes de carbone présents dans le diacide, u étant bien entendu un nombre entier strictement supérieur à 2.

Le nombre d'atomes de carbone t de la diamine et le nombre d'atomes de carbone u du diacide dans le comonomère ou motif (diamine en Ct).(diacide en Cu) du copolyamide selon l'invention, sont de préférence compris chacun entre 4 et 36.

Préférentiellement, le diacide en Cu est obtenu à partir d'une matière première renouvelable selon la norme ASTM D6866.

Le diacide en Cu peut être un diacide aliphatique, cycloaliphatique ou aromatique.

Avantageusement, le diacide en Cu est un diacide aliphatique de formule $HOOC\text{-}(CH_2)_{u-2}\text{-}COOH$.

Pour le choix préférentiel du diacide en Cu du comonomère ou motif (diamine en Ct).(diacide en Cu), on se référera à ce qui a été précédemment décrit comme diacide préférentiel pour le diacide en Cy du comonomère ou motif (diamine en Cx).(diacide en Cy) ou encore pour le diacide en Cw du comonomère ou motif (diamine).(diacide en Cw).

Dans une version avantageuse de l'invention, la diamine en Ct est obtenue à partir d'une matière première renouvelable selon la norme ASTM D6866.

De même, comme indiqué ci-avant pour la diamine en Cx, la diamine en Ct peut être une diamine aliphatique, cycloaliphatique ou arylaromatique.

Bien évidemment, sont exclus les cas particuliers pour lesquels les comonomères ou motifs (diamine en Cx).(diacide en Cy), (diamine).(diacide en Cw) et (diamine en Ct).(diacide en Cu) sont strictement identiques deux à deux.

En particulier, selon une quatrième variante, la (diamine en Ct) désigne une diamine aliphatique de formule $H_2N-(CH_2)_t-NH_2$ dans laquelle t indique le nombre d'atomes de carbone présents dans la diamine, t étant bien entendu un nombre entier strictement supérieur à 0.

Pour le choix préférentiel de la diamine aliphatique en Ct du comonomère ou motif (diamine en Ct).(diacide en Cu), on se référera à ce qui a été précédemment décrit comme diamine préférentielle pour la diamine en Cx du comonomère ou motif (diamine en Cx).(diacide en Cy).

Pour le choix préférentiel de la diamine en Ct et du diacide en Cu du comonomère ou motif (diamine en Ct).(diacide en Cu), notamment lorsqu'ils sont tous les deux obtenus à partir d'une matière première renouvelable selon la norme ASTM D6866, on se référera à ce qui a été précédemment décrit pour les diamines et diacides préférentiels du comonomère ou motif (diamine en Cx).(diacide en Cy).

Bien évidemment, sont exclus les cas particuliers pour lesquels les comonomères ou motifs (diamine en Cx).(diacide en Cy) et (diamine en Ct).(diacide en Cu) sont strictement identiques.

Parmi toutes les combinaisons possibles pour les copolyamides A/(diamine).(diacide en Cw)/(diamine en Ct).(diacide en Cu) selon la quatrième variante, on retiendra en particulier les copolyamides répondant à l'une des formules choisies parmi 11/B.10/6.10, 11/P.10/6.10, 11/B.10/10.10, 11/P.10/10.10, de préférence 11/B.10/10.10 et 11/P.10/10.10.

Selon une cinquième variante avantageuse, la (diamine en Ct) désigne une diamine cycloaliphatique telle que celle décrite précédemment pour la (diamine) dans la formule A/(diamine).(diacide en Cw).

Plus préférentiellement, la diamine cycloaliphatique Ct est de préférence choisie parmi la bis(3,5-dialkyl-4-aminocyclohexyl)methane, la bis(3,5-dialkyl-4-aminocyclohexyl)ethane, la bis(3,5-dialkyl-4-aminocyclohexyl)-propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP).

On choisira de manière encore plus préférentielle, la BMACM ainsi que la PACM comprenant de l'ordre de 20% en masse du stéréoisomère trans/trans.

Comme indiqué précédemment, sont exclus les cas particuliers pour lesquels les comonomères ou motifs (diamine).(diacide en Cw) et (diamine en Ct).(diacide en Cu) sont strictement identiques.

Parmi toutes les combinaisons possibles pour les copolyamides A/(diamine).(diacide en Cw)/(diamine en Ct).(diacide en Cu) selon la cinquième variante, on retiendra en particulier le copolyamide 11/B.10/P.10.

Les proportions molaires de (diamine en Ct) et de (diacide en Cu) sont préférentiellement stoechiométriques.

L'invention se rapporte également à une composition comprenant au moins un copolyamide selon les premier et deuxième aspects de l'invention, avec le comonomère ou motif A étant choisi parmi un motif obtenu à partir d'un aminoacide ou d'un lactame et un motif répondant à la formule (diamine en Cx).(diacide en Cy).

Une composition conforme à l'invention peut en outre comprendre au moins un deuxième polymère.

Avantageusement, ce deuxième polymère peut être choisi parmi un polyamide semi-cristallin, un polyamide amorphe, un copolyamide semi-cristallin, un copolyamide amorphe, un polyetheramide, un polyesteramide et leurs mélanges.

Préférentiellement, ce deuxième polymère est obtenu en tout ou partie à partir d'une matière première renouvelable selon la norme ASTM D6866.

Ce deuxième polymère peut en particulier être choisi parmi le polyacide lactique (PLA), le polyacide glycolique (PGA), les polyhydroxyalcanoates (PHA), et des polysaccharides, ces derniers pouvant être modifiés et/ou formulés.

La composition selon l'invention peut également comprendre en outre au moins un additif.

Cet additif peut notamment être choisi parmi les charges, les fibres, les colorants, les stabilisants, notamment UV, les plastifiants, les modifiants chocs, les agents tensioactifs, les pigments, les azurants, les anti-oxydants, les cires naturelles et leurs mélanges.

Parmi les charges, on peut notamment citer la silice, le noir de carbone, les nanotubes de carbone, le graphite expansé, l'oxyde de titane ou encore les billes de verre.

De préférence, cet additif sera d'origine renouvelable toujours selon la norme ASTM D6866.

Si, à l'exception de l'acide N-heptyl-11-aminoundécanoïque, les dimères d'acides gras et les diamines cycloaliphatiques, les comonomères ou produits de départ envisagés dans la présente description (aminoacides, diamines,

diacides) sont effectivement linéaires, rien n'interdit d'envisager qu'ils puissent en tout ou partie être ramifiés, cycloaliphatiques, partiellement insaturés, aromatiques ou encore arylaromatiques.

On notera en particulier que le diacide carboxylique en C18 peut être l'acide octadécanedioïque, qui est saturé, ou bien l'acide octadécènedioïque, qui présente quant-à-lui une insaturation.

Le copolyamide selon l'invention ou encore la composition selon l'invention peut être utilisé(e) pour constituer une structure.

Cette structure peut être monocouche lorsqu'elle n'est formée que du copolyamide ou que de la composition selon l'invention.

Cette structure peut également être une structure multicouche lorsqu'elle comprend au moins deux couches et que l'une au moins des différentes couches formant la structure est formée du copolyamide ou de la composition selon l'invention.

La structure, qu'elle soit monocouche ou multicouche, peut notamment se présenter sous la forme de fibres, d'un film, d'un tube, d'un corps creux, d'une pièce injectée.

Le copolyamide selon l'invention ou encore la composition selon l'invention peut avantageusement être utilisé(e) pour la fabrication de lentilles, en particulier de lentilles optiques, de verres de lunettes, de montures de lunettes.

L'utilisation du copolyamide ou de la composition selon l'invention peut également être envisagée pour tout ou partie d'éléments de biens d'équipements électriques et électroniques tels que téléphone, ordinateur, systèmes multimédias.

Les copolyamides et compositions de l'invention peuvent être fabriqués selon les procédés habituels décrits dans l'art antérieur. On se référera en particulier au document DE 4318047 ou US 6 143 862.

Le procédé de préparation d'un copolyamide selon l'invention répondant à la formule A/(diamine).(diacide en Cw), comprend au moins une étape de polycondensation de tout ou partie des (co)monomères choisis parmi A, une diamine cycloaliphatique et un diacide en Cw, étant noté qu'au moins un des (co)monomères choisis parmi A et le diacide en Cw est obtenu en tout ou partie à partir de matières premières renouvelables ou bioressourcées selon la norme ASTM D6866.

Le procédé de préparation d'un copolyamide selon l'invention répondant à la formule A/(diamine).(diacide en Cw) /(diamine en Ct).(diacide en Cu), comprend au moins une étape de polycondensation de tout ou partie des (co)monomères choisis parmi A, une diamine cycloaliphatique, une diamine en Ct et des diacides en Cw et Cu, étant noté qu'au moins un des (co)monomères choisis parmi A, le diacide en Cw, la diamine en Ct et le diacide en Cu est obtenu en tout ou partie à partir de matières premières renouvelables selon la norme ASTM D6866.

Les procédés de préparation des copolyamides comprenant deux ou trois motifs distincts tels que mentionnés ci-dessus sont bien évidemment transposables aux procédés de préparation de copolyamides qui comporteraient plus de 3 motifs distincts.

Tous ces procédés comprennent en outre au moins une étape d'obtention d'au moins un des (co)monomères choisis parmi A, le diacide en Cw et, le cas échéant, la diamine en Ct et le diacide en Cu, en tout ou partie à partir de matières premières renouvelables selon la norme ASTM D6866, cette étape d'obtention étant préalable à l'étape de polycondensation proprement dite.

La présente invention va être maintenant décrite dans les exemples ci-dessous, de tels exemples étant donnés à but uniquement illustratif, et bien évidemment non limitatif.

<u>Préparation de différents copolyamides (essais A à S)</u>

Les monomères utilisés en tout ou partie dans les essais A à S sont les suivants :

- l'acide 11-aminoundécanoïque (noté A11 dans le Tableau 1) fourni par la Société ARKEMA, CAS 2432-99-7
- la bis-(3-méthyl-4-aminocyclohexyl)-méthane (notée MACM dans le Tableau 1) commercialisée sous la dénomination Laromin® C260 par la Société BASF, CAS 6864-37-5
- la p-bis(aminocyclohexyl)-méthane (notée PACM20 dans le Tableau 1), comprenant 21% massique d'isomères trans/trans, commercialisée sous la dénomination Amicure® par la Société AIR PRODUCTS, CAS 1761-71-3
- la p-bis(aminocyclohexyl)-méthane (notée PACM50 dans le Tableau 1), comprenant 50% massique d'isomères trans/trans, commercialisée par la Société FLUKA, CAS 1761-71-3
- l'acide dodécanedioïque (noté DC12 dans le Tableau 1) commercialisé par la Société INVISTA, CAS 693-23-2
- l'acide sébacique (noté DC10 dans le Tableau 1) commercialisé par la Société SUN CHEMIE, CAS 111-20-6
- la décanediamine (notée DA10 dans le Tableau 1), commercialisée par la Société SUN CHEMIE, CAS 646-25-3
- l'hexaméthylènediamine ou hexanediamine (notée HDMA dans le Tableau 1), commercialisée par la Société RHODIA, CAS 124-09-4.
- La métaxylylènediamine (notée MXDA dans le tableau 1) commercialisée pas la Société Mitsubishi Gas Chemical, CAS 1477-55-0.

- Le lauryllactame commercialisé par la Société Arkema, CAS 947-04-6.

Différents homopolyamides et copolyamides ont été préparés à partir de 2, 3 ou 4 monomères en mélange avec plusieurs additifs selon les compositions particulières (Exemples A à S) données dans le Tableau 1 ci-dessous.

Le procédé de préparation, transposable pour l'ensemble des Exemples A à S, va maintenant être décrit de manière détaillée pour l'Exemple A.

Il est précisé que les teneurs pondérales en additifs indiquées ci-dessous sont applicables pour l'ensemble des Exemples A à S.

La composition de l'Exemple A comprend les monomères et additifs (acide benzoïque, acide hypophosphoreux, Irganox® 1098 qui est un antioxydant commercialisé par la Société CIBA, eau déminéralisée) suivants, dans les teneurs pondérales suivantes :

- 7,35 kg d'acide aminoundécanoïque (36,51 mol)
- 12,3 kg d'acide décanedioïque (60,82 mol)
- 14,58 kg de MACM (61,16 mol)
- 72,17 g d'acide benzoïque (0,59 mol)
- 35 g d'Irganox® 1098
- 8,75 g d'acide hypophosphoreux ($H_3PO_2$)
- 525 g d'eau distillée

Tableau 1

| Exemples | A11%mol | MACM %mol | PACM20 %mol | PACM50 %mol | DC12 %mol | DC10 %mol | DA10 %mol | HMDA %mol | MXDA %mol | Enthalpie fusion (J/q) | Tg | % (w) C renouvelable (ASTM D6866) |
|---|---|---|---|---|---|---|---|---|---|---|---|---|
| A | 23,0 | 38,5 | - | - | | 38,5 | - | - | - | 0 | 132 | 53 |
| B | 82,0 | 9,0 | - | - | | 9,0 | - | - | - | 0 | 65 | 80 |
| C | 82,0 | 4,5 | 4,5 | - | | 9,0 | - | - | - | 6,7 | 60 | 81 |
| D | 84,8 | 3,8 | 3,8 | - | | 7,6 | - | - | - | 20,1 | 56 | 84 |
| E | 92,4 | 3,8 | - | - | | 3,8 | - | - | - | 33,8 | 50 | 91 |
| F* | | 50,0 | - | - | | 50,0 | - | - | - | 0 | 162 | 40 |
| G* | | 50,0 | - | 50,0 | 50,0 | - | - | - | - | 0 | 155 | 0 |
| H | 50,0 | 25,0 | - | - | | 25,0 | - | - | - | 0 | 113 | 58 |
| I | 20,2 | 39,9 | 39,9 | - | | 39,9 | - | - | - | 0 | 119 | 54 |
| J* | | 31,3 | - | - | | 50,0 | 18,7 | - | - | 0 | 106 | 59 |
| K* | | 19,9 | - | - | | 50,0 | - | 30,1 | - | 0 | 84 | 51 |
| L* | | 38,5 | - | - | | 50,0 | 11,5 | - | - | 0 | 123 | 52 |
| M | 20,0 | - | - | 40,0 | | 40,0 | - | - | - | 33,6 | 121 | 54 |
| N | 82,0 | 4,5 | - | 4,5 | | 9,0 | - | - | - | 28,5 | 58 | 81 |
| O | 82,0 | 4,5 | 4,5 | - | | 9,0 | - | - | - | 6,7 | 60 | 81 |
| P* | | 38,5 | 4,5 | - | | 50,0 | - | - | 11,5 | 0 | 134 | 43 |
| Q* | | 31,3 | 4,5 | - | | 50,0 | - | - | 18,7 | 0 | 118 | 45 |
| R* | | 20,0 | 4,5 | - | | 50,0 | - | - | 30 | 0 | 92 | 48 |
| S* | | 11,0 | 4,5 | - | | 50,0 | - | - | 39 | 0 | 77 | 51 |

* exemples comparatifs

Cette composition est introduite dans un réacteur autoclave de 92 l qui, une fois fermé, est chauffé sous agitation à 260°C. Après une phase de maintien sous pression autogène pendant 2 heures, la pression est alors diminuée en 1,5h jusqu'à la pression atmosphérique. Le réacteur est alors dégazé pendant environ 1 h à 280 °C par un balayage d'azote.

L'homopolyamide ou copolyamide obtenu est alors extrudé sous forme de joncs, refroidi dans un bac à eau à température ambiante, puis granulé.

Les granulés obtenus sont ensuite séchés à 80 °C pendant 12h sous vide, pour atteindre une teneur en humidité inférieure à 0,1 %.

Evaluation des homopolyamides et copolyamides des Exemples A à S

Les températures de transition vitreuse (notées Tg), ainsi que les enthalpies de fusion (en J/g) ont été mesurées en seconde chauffe par DSC selon la norme ISO 11357 avec des vitesses de chauffe et de refroidissement de 20°C/min.

Les mesures obtenues ont été reportées dans le Tableau 1 ci-dessus représentant ainsi la teneur %$C_{org.renouv}$ calculée pour chacun des homopolyamides ou copolyamides des Exemples A à S.

Les copolyamides des Exemples A à E et H à S présentent une teneur %$C_{org.renouv}$ strictement supérieure à 0.

En outre, les Exemples A à C, H à L et O à S sont en plus transparents.

On note par ailleurs que les températures de transition vitreuse peuvent varier, dans les Exemples A à E et H à S, entre 50°C et 134°C, ce qui permet à l'homme de l'art d'adapter la formulation des compositions en fonction de la Tg recherchée, si ce dernier critère est considéré comme important.

Cette remarque est bien évidemment également valable pour les compositions selon les Exemples A à C, H à L et O à S, qui sont de surcroît transparentes, et dont les Tg varient entre 60°C et 134°C.

De manière générale, des Tg supérieures ou égales à 110°C permettent d'envisager des applications, pour les objets obtenus à partir des copolyamides et des compositions conformes à l'invention, pour lesquels la tenue thermomécanique à hautes températures, par exemple à partir de 60°C, est avantageuse.

Comparaison des teintes entre des formulations de copolyamides (Exemples T à V) :

Composition des copolyamides des exemples T à V :

Exemple T (exemple de comparaison):

- 8.05 kg de lauryllactame (40.80 moles)
- 12.37 kg acide décanedioïque (61.16 moles)
- 14.58 kg de BMACM (61.16 moles)
- 72.17 g acide benzoïque (0.59 moles)
- 35 g Irganox 1098
- 3.5 kg eau distillée

Exemple U (exemple de comparaison):

- 3.56 kg décanediamine (20.66 moles)
- 16.69 kg acide décanedioïque (82.53 moles)
- 14.75 kg de BMACM (61.88 moles)
- 72.17 g acide benzoïque (0.59 moles)
- 35 g Irganox 1098
- 525 g eau distillée

Exemple V (exemple selon l'invention):

- 8.16 kg acide aminoundécanoïque (40.51 moles)
- 12.32 kg acide décanedioïque (60.92 moles)
- 14.52 kg de BMACM (60.92 moles)
- 72.17 g acide benzoïque (0.59 moles)
- 35 g Irganox 1098
- 525 g eau distillée

Les exemples U et V sont fabriqués suivant le procédé général décrit précédemment pour l'exemple A, avec

les compositions précédentes U et V.

Le procédé utilisé dans le cas de l'exemple T est le suivant :

Un réacteur autoclave de 92 L est rempli avec 8.05 kg de lauryllactame (40.80 moles), 12.37 kg d'acide décanedioïque (61.16 moles), 14.58 kg de BMACM (61.16 moles), 72.17 g d'acide benzoïque (0.59 moles), 35 g d'Irganox 1098, et 3.5 kg d'eau distillée. L'autoclave est alors fermé et chauffé sous agitation à 280 °C. Après une phase de maintien sous pression autogène de 3h, la pression est diminuée en 1.5h jusqu'à la pression atmosphérique, puis le réacteur est dégazé pendant environ 1 h à 280 °C par un balayage d'azote.

On obtient les copolyamides suivants correspondant respectivement aux exemples T, U et V:

- PA10.10/B.10 (comprenant 54 % de C organiques renouvelables)
- PA12/B.10 (30 % de C organiques renouvelables)
- PA11/B.10 (54 % de C organiques renouvelables)

Le YI (yellow index, indice de jaune) a été mesuré selon la norme ASTM E313 sur des plaques de 2 mm d'épaisseur. Il est représenté dans le tableau 2 suivant.

Tableau 2

| Exemples | Formulation | (B.10) %mol | YI (ASTM E313) |
|---|---|---|---|
| T* | 12/B.10 | 75 | 1,72 |
| U* | 10.10/B.10 | 75 | 1,18 |
| V | 11/B.10 | 75 | 0,33 |
| * Exemples de comparaison | | | |

Classés du plus jaune au moins jaune, on trouve : 12/B.10 > 10.10/B.10 > 11/B.10

Conclusion : Des exemples T à V, c'est le PA 11/B.10 qui présente l'indice de jaune le plus faible.

Mesure de la résistance à la fissuration sous contrainte dans l'éthanol :

Afin de déterminer la résistance à la fissuration sous contrainte (stress cracking), des éprouvettes IFC injectées sont soumises à différentes déformations (jusqu'à 2.99 %) et immergées selon la norme ISO 22088 pendant 24h dans l'éthanol à température ambiante. La déformation indiquée dans le tableau 3 suivant correspond à celle pour laquelle il y a casse de l'éprouvette. Cette mesure reflète notamment la capacité du polyamide à résister aux traitements de surface (lingettes nettoyantes, solvants comprenant de l'éthanol).

Tableau 3

| Fournisseur | **Formulation** | **Composition** | **% déformation** |
|---|---|---|---|
| Arkema | 12/B.I/B.T | 30/20/50 % molaire | 0,50 |
| EMS | B.12 | 50.50 % molaire | 0,99 |
| Arkema | B.14 | 50.50 % molaire | 2,99 |
| Arkema | 11/B.10 | 23/77 % molaire (Exemple A) | Pas de casse |

Dans ces conditions de déformation, on remarque que le PA 11/B.10 ne casse pas. La résistance au stress cracking du PA11/B.10 (Exemple A selon l'invention) est meilleure que celle des homopolyamides PA B.14 et PA B.12 (exemples comparatifs) dans l'éthanol.

Mesure de l'indice de réfraction (n) de ces mêmes éprouvettes:

L'appareil utilisé est un réfractomètre d'Abbe de marque Krüss. On utilise du bromonaphtalène entre le prisme et l'échantillon pour permettre un bon contact entre le prisme et l'éprouvette à étudier.

- B.14 --> n = 1,507
- B.12 --> n= 1,510

- 11/B.10 --> n = 1,511

Le PA 11/B.10 présente un indice de réfraction équivalent à celui du B.12 et supérieur à celui du PA B.14.

Pour des applications de type lentilles optiques et verres de lunettes, l'utilisation de PA11/B.10 selon l'invention est donc nettement avantageuse : En plus d'être transparent, le PA11/B.10 présente un indice de réfraction de 1,511 ; un très faible indice de jaune et une excellente résistance à la fissuration sous contrainte dans l'éthanol.

A l'exception des diamines cycloaliphatiques et des lactames, les aminoacides, diamines et diacides cités dans la présente demande de brevet sont à ce jour connus pour pouvoir être issus de matière première renouvelable au sens de la norme ASTM D6866.

Bien entendu, la présente demande entend également couvrir les copolyamides qui pourront être obtenus à partir d'aminoacides, de lactames, de diamines et/ou diacides, notamment de diamines cycloaliphatiques, pour lesquels seront développées, dans le futur, des voies de synthèse à partir de matières premières renouvelables (bioresourcées) selon ladite norme ASTM D6866.

Par ailleurs, ont été explicitement décrit des copolyamides comprenant deux ou trois motifs distincts. Rien n'interdit toutefois d'envisager des copolyamides comprenant plus de trois motifs distincts, par exemple quatre ou cinq motifs distincts, chacun de ces motifs multiples étant obtenu soit à partir d'un aminoacide, soit à partir d'un lactame, soit répondent à la formule (diamine).(diacide), les différents motifs étant strictement distincts deux à deux et sous réserve que la teneur $\%C_{org.renouv}$ déterminée par l'équation (I) énoncée ci-dessus soit strictement supérieure à 0.

## Revendications

1. Copolyamide comprenant au moins deux motifs et répondant à la formule générale suivante :

   A/(diamine).(diacide en Cw),

   dans laquelle :

   . la diamine est une diamine cycloaliphatique comprenant deux cycles choisie parmi la bis(3,5-dialkyl-4-aminocyclohexyl)-ethane, la bis(3,5-dialkyl-4-aminocyclohexyl)propane, la bis(3,5-dialkyl-4-amino-cyclo-hexyl)butane, la bis-(3-méthyl-4-aminocyclohexyl)-méthane (MACM) et la p-bis(aminocyclohexyl)methane (PACM),
   . w représente le nombre d'atomes de carbone du diacide et est compris de préférence entre 4 et 36, le diacide étant l'acide sébacique (w=10), et
   . A est choisi parmi un motif obtenu à partir d'un aminoacide choisi parmi l'acide 9-aminononanoïque, l'acide 10-aminodécanoïque et l'acide 11-aminoundécanoïque ainsi que ses dérivés,

   et dans laquelle au moins un des monomères choisis parmi A et le diacide en Cw est obtenu en tout ou partie à partir de matières premières renouvelables selon la norme ASTM D6866 afin que la teneur exprimée en pourcentage de carbone organique renouvelable dans le copolyamide, notée $\%C_{org.renouv}$, soit strictement supérieure à 0, la teneur $\%C_{org.renouv}$ répondant à l'équation (I) suivante :

$$\%C_{org.renouv} = \frac{\sum_i Fi \times Ci + \sum_k Fk \times Ck'}{\left(\sum_j Fj \times Cj + \sum_i Fi \times Ci + \sum_k Fk \times Ck\right)} \times 100 \qquad \text{(I)}$$

   avec i = monomère(s) issu(s) de matières premières 100% renouvelables au sens de la norme ASTM D6866
   j = monomère(s) issu(s) de matières premières 100% fossiles au sens de la norme ASTM D6866
   k = monomère(s) issu(s) en partie de matières premières renouvelables au sens de la norme ASTM D6866
   Fi, Fj, Fk = fraction(s) molaire(s) respective(s) des monomères i, j et k dans le copolyamide
   Ci, Cj, Ck = nombre respectif d'atomes de carbone des monomères i, j et k dans le copolyamide
   Ck' = nombre d'atomes de carbone organique renouvelable au sens de la norme ASTM D6866 dans le(s) monomère(s) k.

2. Copolyamide selon la revendication 1, **caractérisé en ce que** la teneur $\%C_{org.renouv}$ est supérieure ou égale à 20%.

**3.** Copolyamide selon la revendication 1 ou 2, **caractérisé en ce que** :

- la teneur molaire en A est comprise entre 20 et 82%, et
- les teneurs molaires en diamine cycloaliphatique et en diacide en Cw sont chacune comprises entre 9 et 40%.

**4.** Copolyamide selon l'une quelconque des revendications 1 à 3, **caractérisé en ce qu'**il répond à l'une des formules choisies parmi 11/B.10 et 11/P.10, où B signifie MACM (bis-(3-méthyl-4-aminocyclohexyl)-méthane) et P signifie PACM (p-bis(aminocyclohexyl)-methane).

**5.** Copolyamide selon l'une quelconque des revendications 1 à 4, **caractérisé en ce qu'**il comprend en outre au moins un troisième motif différent des deux premiers motifs, et répond à la formule générale suivante :

A/(diamine).(diacide en Cw)/(diamine en Ct).(diacide en Cu)

dans laquelle t représente le nombre d'atomes de carbone de la diamine et u représente le nombre d'atomes de carbone du diacide, t et u étant de préférence compris chacun entre 4 et 36,
la diamine Ct étant une diamine cycloaliphatique comprenant deux cycles choisie parmi la bis(3,5-dialkyl-4-aminocyclo-hexyl)ethane, la bis(3,5-dialkyl-4-aminocyclohexyl)propane, la bis(3,5-dialkyl-4-aminocyclohexyl)butane, la bis-(3-méthyl-4-aminocyclohexyl)-méthane (MACM), la p-bis(aminocyclohexyl)methane (PACM),
et dans laquelle au moins un des monomères choisis parmi A, le diacide en Cw, la diamine en Ct et le diacide en Cu est obtenu en tout ou partie à partir de matières premières renouvelables selon la norme ASTM D6866.

**6.** Copolyamide selon la revendication 5, **caractérisé en ce que** :

- la teneur molaire en A est comprise entre 20 et 82%,
- la somme des teneurs molaires en diamine cycloaliphatique et en diamine en Ct, d'une part, et la somme des teneurs molaires en diacides en Cw et en Cu, d'autre part, sont chacune comprises entre 9 et 40%.

**7.** Copolyamide selon l'une quelconque des revendications 5 ou 6, **caractérisé en ce que** le diacide en Cu est choisi parmi l'acide succinique (u=4), l'acide adipique (u=6), l'acide heptanedioïque (u=7), l'acide azélaïque (u=9), l'acide sébacique (u=10), l'acide undécanedioïque (u=11), l'acide dodécanedioïque (u=12), l'acide brassylique (u=13), l'acide tetradécanedioïque (u=14), l'acide hexadécanedioïque (u=16), l'acide octadécanedioïque (u=18), l'acide octadécènedioïque (u=18), l'acide eicosanedioïque (u=20), l'acide docosanedioïque (u=22) et les dimères d'acides gras contenant 36 carbones.

**8.** Copolyamide selon l'une quelconque des revendications 5 à 7, **caractérisé en ce qu'**il répond à la formule 11/B.10/P.10, où B signifie MACM (bis-(3-méthyl-4-aminocyclohexyl)-méthane) et P signifie PACM (p-bis(aminocyclohexyl)-methane).

**9.** Composition comprenant au moins un copolyamide selon l'une quelconque des revendications 1 à 8.

**10.** Composition selon la revendication 9, **caractérisée en ce qu'**elle comprend en outre au moins un deuxième polymère choisi parmi un polyamide semi-cristallin ou amorphe, un copolyamide semi-cristallin ou amorphe, un polyétheramide, un polyesteramide et leurs mélanges.

**11.** Composition selon la revendication 9 ou 10, **caractérisé en ce que** le deuxième polymère est obtenu en tout ou partie à partir d'une matière première renouvelable selon la norme ASTM D6866.

**12.** Composition selon l'une quelconque des revendications 9 à 11, **caractérisée en ce qu'**elle comprend en outre au moins un additif, de préférence d'origine naturelle et renouvelable selon la norme ASTM D6866, cet additif étant choisi parmi les charges, les fibres, les colorants, les stabilisants, les plastifiants, les modifiants chocs, les agents tensioactifs, les pigments, les azurants, les anti-oxydants, les cires naturelles et leurs mélanges.

**13.** Utilisation d'un copolyamide selon l'une quelconque des revendications 1 à 78 ou d'une composition selon l'une quelconque des revendications 9 à 12 pour constituer une structure monocouche ou au moins une couche d'une structure multicouche.

**14.** Utilisation selon la revendication 13, **caractérisée en ce que** la structure se présente sous la forme de fibres, d'un film, d'un tube, d'un corps creux ou d'une pièce injectée.

**15.** Utilisation d'un copolyamide selon l'une quelconque des revendications 1 à 8 ou d'une composition selon l'une quelconque des revendications 9 à 12 pour la fabrication de lentilles, de verre de lunettes, de montures de lunettes.

**Patentansprüche**

**1.** Copolyamid, umfassend mindestens zwei Einheiten und mit der folgenden allgemeinen Formel:

$$A/(Diamin).(Cw\text{-}Disäure),$$

wobei:

- das Diamin ein cycloaliphatisches Diamin mit zwei Ringen ist, ausgewählt aus Bis-(3,5-dialkyl-4-aminocyclohexyl)-ethan, Bis-(3,5-dialkyl-4-aminocyclohexyl)-propan, Bis-(3,5-dialkyl-4-aminocyclohexyl)-butan, Bis-(3-methyl-4-aminocyclohexyl)-methan (MACM) und p-Bis-(aminocyclohexyl)-methan (PACM),
- w die Anzahl von Kohlenstoffatomen der Disäure darstellt und vorzugsweise zwischen 4 und 36 ist, wobei die Disäure Sebacinsäure (w = 10) ist, und
- A ausgewählt ist aus einer Einheit, die von einer Aminosäure erhalten wird, ausgewählt aus 9-Aminononansäure, 10-Aminodecansäure und 11-Aminoundecansäure sowie ihren Derivaten,

und wobei mindestens eines der Monomere, ausgewählt aus A und der Cw-Disäure, gänzlich oder teilweise aus erneuerbaren Ausgangsmaterialien gemäß der Norm ASTM D6866 erhalten wird, damit der in Prozent ausgedrückte Gehalt an erneuerbarem organischen Kohlenstoff im Copolyamid, bezeichnet als % $C_{org/ern}$, streng größer ist als 0, wobei der Gehalt % $C_{org/ern}$ die folgende Gleichung (I) aufweist:

$$\%\ C_{org/ern} = \frac{\sum_i Fi \times Ci + \sum_k Fk \times Ck'}{\left(\sum_j Fj \times Cj + \sum_i Fi \times Ci + \sum_k Fk \times Ck\right)} \times 100 \qquad (I)$$

wobei

i = Monomer(e), das (die) von 100 % erneuerbaren Ausgangsmaterialien gemäß der Norm ASTM D6866 stammt (stammen)
j = Monomer(e), das (die) von 100 % fossilen Ausgangsmaterialien gemäß der Norm ASTM D6866 stammt (stammen)
k = Monomer(e), das (die) teilweise von erneuerbaren Ausgangsmaterialien gemäß der Norm ASTM D6866 stammt (stammen)
Fi, Fj, Fk = jeweilige Molfraktion(en) der Monomere i, j und k im Copolyamid
Ci, Cj, Ck = jeweilige Anzahl von Kohlenstoffatomen der Monomere i, j und k im Copolyamid
Ck' = Anzahl erneuerbarer organischer Kohlenstoffatome gemäß der Norm ASTM D6866 in dem (den) Monomer(en) k.

**2.** Copolyamid nach Anspruch 1, **dadurch gekennzeichnet, dass** der Gehalt % $C_{org/ern}$ größer oder gleich 20 % ist.

**3.** Copolyamid nach Anspruch 1 oder 2, **dadurch gekennzeichnet, dass**:

- der Molgehalt an A zwischen 20 und 82 % liegt, und
- die Molgehalte an cycloaliphatischem Diamin und an Cw-Disäure jeweils zwischen 9 und 40 % liegen.

**4.** Copolyamid nach einem der Ansprüche 1 bis 3, **dadurch gekennzeichnet, dass** dieses eine der Formeln aufweist, ausgewählt aus 11/B.10 und 11/P.10, wobei B MACM (Bis-(3-methyl-4-aminocyclohexyl)-methan) bedeutet, und P

PACM (p-Bis-(aminocyclohexyl)-methan) bedeutet.

5. Copolyamid nach einem der Ansprüche 1 bis 4, **dadurch gekennzeichnet, dass** dieses außerdem mindestens eine dritte Einheit umfasst, die von den beiden ersten Einheiten verschieden ist, und die folgende allgemeine Formel aufweist:

A/(Diamin).(Cw-Disäure)/(Ct-Diamin).(Cu-Disäure),

wobei t die Anzahl von Kohlenstoffatomen des Diamins darstellt, und u die Anzahl von Kohlenstoffatomen der Disäure darstellt, wobei t und u vorzugsweise jeweils zwischen 4 und 36 liegen,
das Ct-Diamin ein cycloaliphatisches Diamin mit zwei Ringen ist, ausgewählt aus Bis-(3,5-dialkyl-4-aminocyclohexyl)-ethan, Bis-(3,5-dialkyl-4-aminocyclohexyl)-propan, Bis-(3,5-dialkyl-4-aminocyclohexyl)-butan, Bis-(3-methyl-4-aminocyclohexyl)-methan (MACM) und p-Bis-(aminocyclohexyl)-methan (PACM),
und wobei mindestens eines der Monomere, ausgewählt aus A, der Cw-Disäure, dem Ct-Diamin und der Cu-Disäure, gänzlich oder teilweise aus erneuerbaren Materialien gemäß der Norm ASTM D6866 erhalten wird.

6. Copolyamid nach Anspruch 5, **dadurch gekennzeichnet, dass**

- der Molgehalt an A zwischen 20 und 82 % liegt,
- die Summe der Molgehalte an cycloaliphatischem Diamin und Ct-Diamin einerseits, und die Summe der Molgehalte an Cw- und Cu-Disäuren andererseits, jeweils zwischen 9 und 40 % liegen.

7. Copolyamid nach einem der Ansprüche 5 oder 6, **dadurch gekennzeichnet, dass** die Cu-Disäure ausgewählt ist aus Bernsteinsäure (u = 4), Adipinsäure (u = 6), Heptandisäure (u = 7), Azelainsäure (u = 9), Sebacinsäure (u = 10), Undecandisäure (u = 11), Dodecandisäure (u = 12), Brassylsäure (u = 13), Tetradecandisäure (u = 14), Hexadecandisäure (u = 16), Octadecandisäure (u = 18), Octadecendisäure (u = 18), Eicosandisäure (u = 20), Docosandisäure (u = 22) und Fettsäuredimeren mit 36 Kohlenstoffatomen.

8. Copolyamid nach einem der Ansprüche 5 bis 7, **dadurch gekennzeichnet, dass** dieses die Formel 11/B.10/P.10 aufweist, wobei B MACM (Bis-(3-methyl-4-aminocyclohexyl)-methan) bedeutet, und P PACM (p-Bis-(aminocyclohexyl)-methan) bedeutet.

9. Zusammensetzung, umfassend mindestens ein Copolyamid nach einem der Ansprüche 1 bis 8.

10. Zusammensetzung nach Anspruch 9, **dadurch gekennzeichnet, dass** diese außerdem mindestens ein zweites Polymer umfasst, ausgewählt aus einem semikristallinen oder amorphen Polyamid, einem semikristallinen oder amorphen Copolyamid, einem Polyetheramid, einem Polyesteramid und ihren Mischungen.

11. Zusammensetzung nach Anspruch 9 oder 10, **dadurch gekennzeichnet, dass** das zweite Polymer gänzlich oder teilweise aus einem erneuerbaren Ausgangsmaterial gemäß der Norm ASTM D6866 erhalten wird.

12. Zusammensetzung nach einem der Ansprüche 9 bis 11, **dadurch gekennzeichnet, dass** diese außerdem mindestens ein Additiv, vorzugsweise natürlichen Ursprungs und erneuerbar gemäß der Norm ASTM D6866, umfasst, wobei dieses Additiv ausgewählt ist aus Chargen, Fasern, Farbstoffen, Stabilisatoren, Weichmachern, Schlagzähigkeitsmodifikatoren, grenzflächenaktiven Stoffen, Pigmenten, Aufhellern, Antioxidantien, natürlichen Wachsen und ihren Mischungen.

13. Verwendung eines Copolyamids nach einem der Ansprüche 1 bis 8, oder einer Zusammensetzung nach einem der Ansprüche 9 bis 12, zur Bildung einer einschichtigen Struktur oder mindestens einer Schicht einer mehrschichtigen Struktur.

14. Verwendung nach Anspruch 13, **dadurch gekennzeichnet, dass** sich die Struktur in der Form von Fasern, eines Films, eines Rohrs, eines Hohlkörpers oder eines injizierten Stücks präsentiert.

15. Verwendung eines Copolyamids nach einem der Ansprüche 1 bis 8, oder einer Zusammensetzung nach einem der Ansprüche 9 bis 12, zur Herstellung von Linsen, Brillengläsern, Brillenfassungen.

**Claims**

1. Copolyamide comprising at least two units and corresponding to the following general formula:

$$A/(diamine).(Cw\ diacid),$$

in which:

- the diamine is a cycloaliphatic diamine comprising two rings chosen from bis(3,5-dialkyl-4-aminocyclohexyl)ethane, bis(3,5-dialkyl-4-aminocyclohexyl)propane, bis(3,5-dialkyl-4-aminocyclohexyl)butane, bis(3-methyl-4-aminocyclohexyl)methane (MACM) and bis(p-aminocyclohexyl)methane (PACM),
- w represents the number of carbon atoms of the diacid and is preferably between 4 and 36, the diacid being sebacic acid (w=10), and
- A is chosen from a unit obtained from an amino acid chosen from 9-aminononanoic acid, 10-aminodecanoic acid and 1-aminoundecanoic acid and its derivatives,

and in which at least one of the monomers chosen from A and the Cw diacid is obtained, in all or part, from renewable starting materials according to Standard ASTM D6866 in order for the content, expressed as percentage, of renewable organic carbon in the copolyamide, denoted $\%C_{renew.org}$, to be strictly greater than 0, the content $\%C_{renew.org}$ corresponding to the following equation (I) :

$$\%C_{renew.org} = \frac{\sum_i Fi \times Ci + \sum_k Fk \times Ck'}{\left(\sum_j Fj \times Cj + \sum_i Fi \times Ci + \sum_k Fk \times Ck\right)} \times 100 \qquad (I)$$

with i = monomer(s) resulting from 100% renewable starting materials, within the meaning of Standard ASTM D6866
j = monomer(s) resulting from 100% fossil starting materials, within the meaning of Standard ASTM D6866
k = monomer(s) resulting in part from renewable starting materials, within the meaning of Standard ASTM D6866
Fi, Fj, Fk = respective molar fraction (s) of the monomers i, j and k in the copolyamide Ci, Cj, Ck = respective number of carbon atoms of the monomers i, j and k in the copolyamide,
Ck' = number of atoms of renewable organic carbon, within the meaning of Standard ASTM D6866, in the monomer(s) k.

2. Copolyamide according to Claim 1, **characterized in that** the $\%C_{renew.org}$ content is greater than or equal to 20%.

3. Copolyamide according to Claim 1 or 2, **characterized in that**:

- the molar content of A is between 20 and 82%, and
- the molar contents of cycloaliphatic diamine and of Cw diacid are each between 9 and 40%.

4. Copolyamide according to any one of Claims 1 to 3, **characterized in that** it corresponds to one of the formulae chosen from 11/B.10 and 11/P.10, where B means MACM (bis(3-methyl-4-aminocyclohexyl)methane) and P means PACM (bis(p-aminocyclohexyl)methane).

5. Copolyamide according to any one of Claims 1 to 4, **characterized in that** it additionally comprises at least one third unit different from the first two units, and corresponds to the following general formula:

$$A/(diamine).(Cw\ diacid)/(Ct\ diamine).(Cu\ diacid)$$

in which t represents the number of carbon atoms of the diamine and u represents the number of carbon atoms of the diacid, t and u preferably each being between 4 and 36,
the Ct diamine being a cycloaliphatic diamine comprising two rings chosen from bis(3,5-dialkyl-4-aminocyclohexyl)ethane, bis(3,5-dialkyl-4-aminocyclohexyl)propane, bis(3,5-dialkyl-4-aminocyclohexyl)butane, bis(3-methyl-4-aminocyclohexyl)methane (MACM) and bis(p-aminocyclohexyl)methane (PACM),
and in which at least one of the monomers chosen from A, the Cw diacid, the Ct diamine and the Cu diacid is obtained, in all or part, from renewable starting materials according to Standard ASTM D6866.

**6.** Copolyamide according to Claim 5, **characterized in that**:

- the molar content of A is between 20 and 82%,
- the sum of the molar contents of cycloaliphatic diamine and of Ct diamine, on the one hand, and the sum of the molar contents of Cw and Cu diacids, on the other hand, are each between 9 and 40%.

**7.** Copolyamide according to either one of Claims 5 and 6, **characterized in that** the Cu diacid is chosen from succinic acid (u=4), adipic acid (u=6), heptanedioic acid (u=7), azelaic acid (u=9), sebacic acid (u=10), undecanedioic acid (u=11), dodecanedioic acid (u=12), brassylic acid (u=13), tetradecanedioic acid (u=14), hexadecanedioic acid (u=16), octadecanedioic acid (u=18), octadecenedioic acid (u=18), eicosanedioic acid (u=20), docosanedioic acid (u=22) and the dimer fatty acids comprising 36 carbons.

**8.** Copolyamide according to any one of Claims 5 to 7, **characterized in that** it corresponds to the formula 11/B.10/P.10, where B means MACM (bis(3-methyl-4-aminocyclohexyl)methane) and P means PACM (bis(p-aminocyclohexyl)methane).

**9.** Composition comprising at least one copolyamide according to any one of Claims 1 to 8.

**10.** Composition according to Claim 9, **characterized in that** it additionally comprises at least one second polymer chosen from a semicrystalline or amorphous polyamide, a semicrystalline or amorphous copolyamide, a polyetheramide, a polyesteramide and their blends.

**11.** Composition according to Claim 9 or 10, **characterized in that** the second polymer is obtained, in all or part, from a renewable starting material according to Standard ASTM D6866.

**12.** Composition according to any one of Claims 9 to 11, **characterized in that** it additionally comprises at least one additive, preferably of natural and renewable origin according to Standard ASTM D6866, this additive being chosen from fillers, fibres, dyes, stabilizers, plasticizers, impact modifiers, surface-active agents, pigments, brighteners, antioxidants, natural waxes and their mixtures.

**13.** Use of a copolyamide according to any one of Claims 1 to 8 or of a composition according to any one of Claims 9 to 12 to constitute a monolayer structure or at least one layer of a multilayer structure.

**14.** Use according to Claim 13, **characterized in that** the structure is provided in the form of fibres, of a film, of a pipe, of a hollow body or of an injected component.

**15.** Use of a copolyamide according to any one of Claims 1 to 8 or of a composition according to any one of Claims 9 to 12 in the manufacture of lenses, of spectacle lenses or of spectacle frames.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1595907 A
- US 20050272908 A
- FR 2575756
- GB 1193487 A
- EP 1227132 A
- US 6255378 B
- EP 0471566 A
- DE 4318047
- US 6143862 A